# EUROPÄISCHE PATENTANMELDUNG

(11) **EP 1 362 774 A2**
(43) Veröffentlichungstag der Anmeldung: **19.11.2003**
(21) Anmeldenummer: 03010781.7
(22) Anmeldetag: 14.05.2003
(51) Int. Cl.: B62D 63/06

(54) **Fahrzeuganhänger und Radaufhängung für einen Fahrzeuganhänger**

(30) Priorität: 15.05.2002 DE 10221870
(71) Anmelder: Fahrzeugteile Service-Zentrum Mellendorf GmbH, 30900 Wedemark (DE)
(72) Erfinder: Peters, Dietmar, 49424 Goldenstedt (DE); Woyczechowski, Ralf, 21224 Rosengarten (DE)
(74) Vertreter: Gerstein, Hans Joachim

(57) **Zusammenfassung**

Die Erfindung betrifft einen Fahrzeuganhänger, insbesondere Kraftfahrzeuganhänger, mit einer an einem eine Ladefläche aufnehmenden Rahmen (9) verschwenkbar gelagerten Schwinge (8), an der ein Rad (10) drehbar gelagert ist, mit einer Drehbegrenzung für die Schwinge (8) und mit zumindest einer Verstelleinrichtung (3, 4) zum Anheben des Rahmens (9) aus einer abgesenkten Beladeposition in eine Betriebsposition sowie eine Radaufhängung. Aufgabe der Erfindung ist es einen Anhänger und eine Radaufhängung bereitzustellen, der eine zuverlässige Betriebsweise ermöglicht und eine möglichst einfache und kostengünstige Fertigung erlaubt. Diese Aufgabe wird dadurch gelöst, dass die Schwinge (8) in der Betriebsposition mit ihrem der Drehachse (1) gegenüberliegenden Ende in einem Lagerschuh (6) gelagert ist, bzw. dass Lagerschuh (6) und Schwinge (8) an einem Träger angeordnet sind.

## Beschreibung

Die Erfindung betrifft einen Fahrzeuganhänger, insbesondere ein Kraftfahrzeuganhänger gemäß dem Oberbegriff des Anspruchs 1 sowie eine Radaufhängung für einen Fahrzeuganhänger gemäß Anspruch 12. Der Anhänger ist insbesondere geeignet, um schwere Laster ohne großen Aufwand auf einer Ladefläche anzuordnen bzw. um ein einfaches Verladen zu ermöglichen.

Absenkbare Fahrzeuganhänger sind aus dem Stand der Technik bekannt. In der EP 683 089 B1 ist ein Anhänger mit einer Ladefläche beschrieben, deren Hinterkante absenkbar ist und der einen Rahmen aufweist, an dem je zwei Achsen mit je einem Radlenker und einem Achshebel angeordnet sind, wobei das an dem Ende des Radlenkers angeordnete Rad in dessen Winkelstellung zu dem Rahmen über einen Hydraulikzylinder verstellt wird. Der Hydraulikzylinder ist waagerecht ausgerichtet und zwischen dem Chassis und dem Achshebel angeordnet. Nachteilig an dieser Ausführung ist, dass zwischen dem Hydraulikzylinder und dem Radhebel ein Achshebel angeordnet ist, um eine entsprechende Übersetzung zu bewirken, wodurch ein erheblich erhöhter konstruktiver Aufwand notwendig ist.

Ausgehend von diesem Stand der Technik liegt der Erfindung die Aufgabe zugrunde, einen Anhänger bereitzustellen, der eine zuverlässige Betriebsweise ermöglicht und eine möglichst einfache und kostengünstige Fertigung erlaubt. Diese Aufgabe wird durch einen Fahrzeuganhänger mit den Merkmalen des Anspruchs 1 sowie eine Radaufhängung mit den Merkmalen des Anspruchs 12 gelöst.

Durch die Lagerung der Schwinge in einem Lagerschuh, der an dem Drehpunkt der Schwinge gegenüberliegenden Ende angeordnet ist, wird eine vereinfachte Lagerung und Festlegung der Schwinge an dem Rahmen des Anhängers bewirkt, so dass es möglich ist, auf aufwendige Kraftübertragungselemente, wie Hebel, Kniehebel oder dergleichen zu verzichten. Es wird eine sichere Verriegelung bereitgestellt, die einfach zu fertigen ist und die sehr gute Fahreigenschaften bei einem minimalen konstruktiven Aufwand gewährleisten. Auf Grund des Wegfalls einer Vielzahl an Lagerungspunkten und Umlenkeinrichtungen werden die Fertigungskosten verringert, was die Gesamtkosten des Fahrzeuganhängers reduziert. Der Lagerschuh dient zur Aufnahme der entsprechenden Kräfte und wirkt als Anschlag sowie als Begrenzung, so dass das Erreichen der Betriebsposition eindeutig definiert ist. Darüber hinaus übt der Lagerschuh eine Führungsfunktion aus, da die Schwinge durch den Lagerschuh eine zusätzliche Führung erhält.

Vorteilhafterweise ist der Lagerschuh in Fahrtrichtung hinter dem Drehpunkt der Schwinge angeordnet, wodurch eine erhöhte Sicherheit im Fahrbetrieb des Anhängers gewährleistet ist.

In einer Ausgestaltung der Erfindung ist vorgesehen, dass der Lagerschuh zumindest eine im wesentlichen parallel zur Schwinge verlaufenden, festgelegten ersten Lagerbereich aufweist, der vorteilhafterweise an dem Rahmen des Fahrzeuganhängers befestigt ist. Darüber hinaus weist der Lagerschuh einen senkrecht dazu und waagerecht verlaufenden zweiten Lagerbereich auf, der verschwenkbar ausgebildet ist, so dass die Schwinge durch den Lagerschuh hindurchschwenken kann, wodurch ein Absenken des gesamten Anhängers bzw. der Lagerfläche des Anhängers ermöglicht wird. Alternativ zu einem verschwenkbar ausgebildeten zweiten Lagerbereich kann eine Verriegelung durch einen steckbaren oder verschraubbaren Anschlag oberhalb und gegebenenfalls unterhalb des ersten Lagerbereiches oder an einer anderen Stelle an der Schwinge erreicht werden, wodurch die Schwinge ebenfalls in ihrer Verschwenkbewegung begrenzt und somit sicher gelagert wird.

Zur Erhöhung der Fahrsicherheit und des Fahrkomforts ist es vorgesehen, dass an dem Abschnitt der Schwinge, der in dem Lagerschuh gelagert ist, Federund/oder Dämpferelemente angeordnet sind. Eine mögliche Ausgestaltung der Feder- und/oder Dämpferelemente besteht in der Anordnung von Gummielementen oder Paradefedern, wobei Gummielemente eine gute Synthese aus Federung und Dämpfung bei gleichzeitig geringem Platzbedarf und Wartungsaufwand gewährleisten.

Es sind weiterhin Verstelleinrichtungen vorgesehen, die den Fahrzeuganhänger aus der abgesenkten Position in die Betriebsposition verfahren bzw. um umgekehrt ein sanftes Absenken des Anhängers aus der Betriebsposition in die Belade- bzw. Entladeposition zu ermöglichen. Die Verstelleinrichtungen werden vorteilhafterweise über ein Hydraulikantrieb oder ein mechanisches Verstellgetriebe angetrieben, wobei die Alternative zwischen einer motorisch, insbesondere elektromotrischen oder manuellen Antriebsweise besteht. Je nach Komfortanspruch oder Einsatzgebiet können verschiedene Varianten der letztendlich als Wagenheber wirkenden Stelleinrichtung gewählt werden.

Um beim Absenken des Anhängers eine zu starke Belastung des Schleppfahrzeuges zu verhindern, sind Stützeinrichtungen an dem Anhänger vorgesehen, die in Fahrtrichtung vor den Rädern angeordnet sind, die beim Absenken des Rahmens ausgefahren werden, so dass die Anhängerkupplung entlastet wird. Die Stützeinrichtungen können manuell oder hydraulisch oder elektromotorisch ausgefahren werden, wobei diese als ausfahrbare Räder oder Ständer ausgebildet sind. Weiterhin ist eine Koppeleinrichtung vorgesehen, die die Stützeinrichtung in der Gestalt ausfahren lässt, dass bei abgesenktem Rahmen die Anhängerkupplung des Zugfahrzeuges automatisch entlastet wird.

Um die Verstelleinrichtungen möglichst klein dimensionieren zu können, sind diese am hinteren Ende des Rahmens des Fahrzeuganhängers angeordnet. Darüber hinaus wird durch diese Art und Weise der Anordnung eine möglichst senkrechte Krafteinleitung und damit ein optimaler Wirkungsgrad der Verstelleinrichtungen ermöglicht.

Um die Tragfähigkeit des Anhängers zu erhöhen, sind zwei oder mehrere Schwingen hintereinander auf einer Seite des Rahmens angeordnet, so dass das maximal zulässige Gewicht der Ladung vordringlich durch die Anzahl der Schwingen bzw. der vorgesehenen Räder auf einer Seite des Rahmens bestimmt wird.

Vorteilhafterweise ist die Radaufhängung für einen wie oben beschriebenen Fahrzeuganhänger mit einem Träger versehen, an dem eine Schwinge und der entsprechende Lagerschuh befestigt sind. Der Lagerschuh ist dabei an dem freien Ende der Schwinge angeordnet. Dadurch ist es möglich, die Radaufhängung und Lagerung komplett vorzumontieren.

Eine Weiterbildung einer solchen Radaufhängung sieht vor, dass die Schwinge und der Lagerschuh zusammen mit dem Träger als Baugruppe montiert sind, wobei der Träger an einem Fahrzeuganhängerrahmen befestigbar ist, so dass ein besonders einfacher Austausch bzw. eine Aufrüstung oder Umrüstung eines Fahrzeuganhängers mit einem oder mehreren zusätzlichen Rädern möglich ist.

Nachfolgend wird ein Ausführungsbeispiel der Erfindung anhand der beigefügten Figuren näher erläutert werden. Gleiche Bezugszeichen in unterschiedlichen Figuren bezeichnen gleiche Bauteile. Es zeigen:
- Figur 1 -: eine perspektivische Draufsicht auf einen Fahrzeuganhänger;
- Figur 2 -: eine Detailansicht einer Radaufhängung eines Fahrzeuganhängers in Betriebsstellung;
- Figur 3 -: eine Detailansicht gemäß Figur 2 in abgesenkter Stellung;
- Figuren 4a und 4b -: eine Draufsicht auf den Fahrzeuganhänger; sowie
- Figuren 5a und 5b -: eine Schrägdraufsicht auf einen Fahrzeuganhänger mit vier Radaufhängungen.

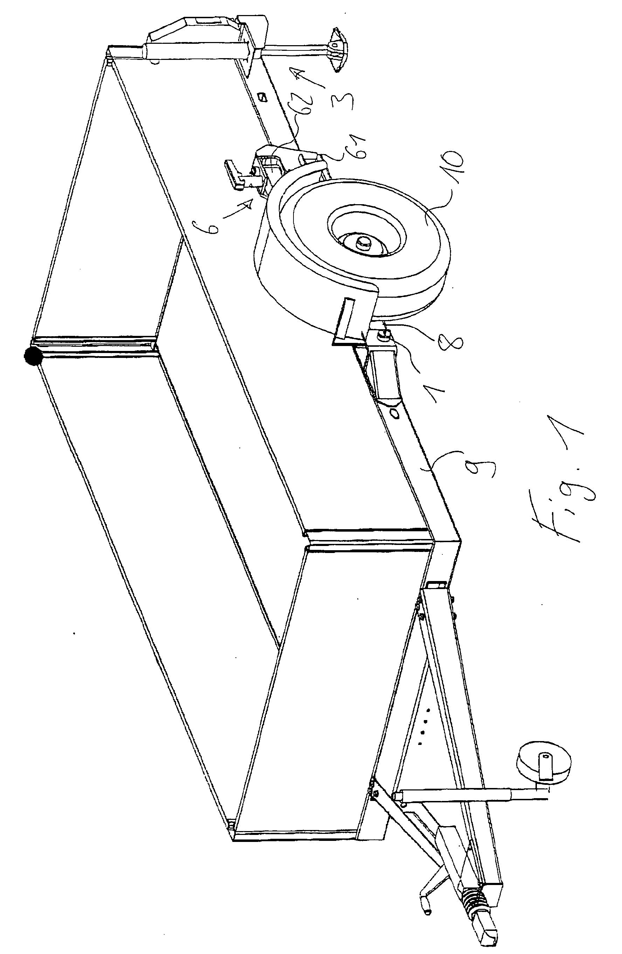

Figur 1 zeigt einen Anhänger in einer perspektivischen Schrägdraufsicht, bei der in einem Rahmen 9 eine Schwinge 8 drehbar um eine Achse 1 gelagert ist. Die Schwinge 8 ist seitlich und parallel zu dem Rahmen 9 des Anhängers angeordnet und in der dargestellten, aufgebockten Betriebsstellung in einem Lagerschuh 6 gelagert. Der Anhänger ist in der dargestellten Position durch zwei Verstelleinrichtungen 3 und 4, von denen nur eine Verstelleinrichtung 3 sichtbar ist, aufgebockt.

Die Verstelleinrichtungen 3 und 4 sind am hinteren Ende des Rahmens 9 angeordnet und dienen gleichfalls als Wagenheber und können entweder hydraulisch oder mit einem mechanischen Getriebe verfahren werden. Der Antrieb der Verstelleinrichtungen 3, 4 kann motorisch oder manuell erfolgen. Durch das Aufbokken des Rahmens 9 auf die Verstelleinrichtungen 3 und 4 sowie auf das vordere Stützrad, werden die beidseitig an dem Rahmen 9 angeordneten Räder 10 entlastet.

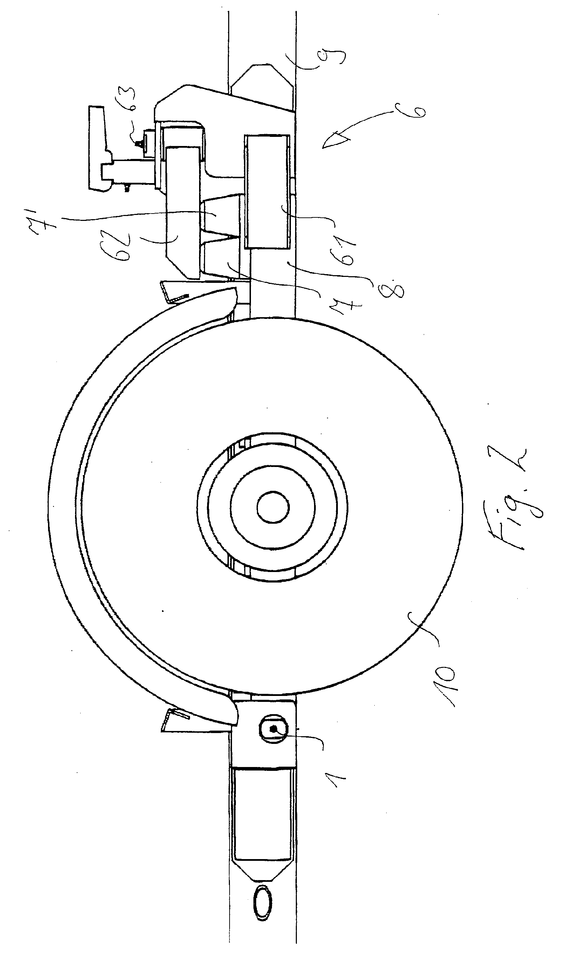

Die Figur 2 zeigt diesen Aufbau in einer Seitenansicht in einer vergrößerten Darstellung, aus der zu erkennen ist, dass der Lagerschuh 6 aus einem ersten Lagerbereich 61 und einem zweiten Lagerbereich 62 besteht. Der erste Lagerbereich 61 dient zur Unterstützung der Führung der Schwinge 8 und verhindert eine Drehung der Schwinge 8 um eine vertikale Achse, die senkrecht auf der Drehachse 1 steht. Der zweite Lagerbereich 62 des Lagerschuhs 6 dient als Anschlag in der Betriebsstellung, so dass die Schwinge 8 nicht entgegen dem Uhrzeigersinn nach oben verschwenken kann. An dem dem Lagerschuh 6 zugeordneten Ende der Schwinge 8 sind Feder- und Dämpferelemente 7, 7' angeordnet, die eine Komfort- und Fahrsicherheitserhöhung bewirken. In dem in der Figur 1 gezeigten Zustand ist das Rahmenheck des Fahrzeuganhängers entlastet, so dass das Eigengewicht des Fahrzeuganhängers sich nicht über den zweiten Lagerbereich 62, die Federelemente 7, 7' und die Schwinge 8 auf dem Rad 10 abstützt.

Der obere, zweite Lagerbereich 62 ist über eine Achse 63 um eine vertikale Achse schwenkbar gelagert und kann so im entlasteten Zustand, wie in der Figur 1 angedeutet ist, dergestalt verschwenkt werden, dass der zweite Lagerbereich 62 aus der Bewegungsbahn der Schwinge 8 bewegt wird.

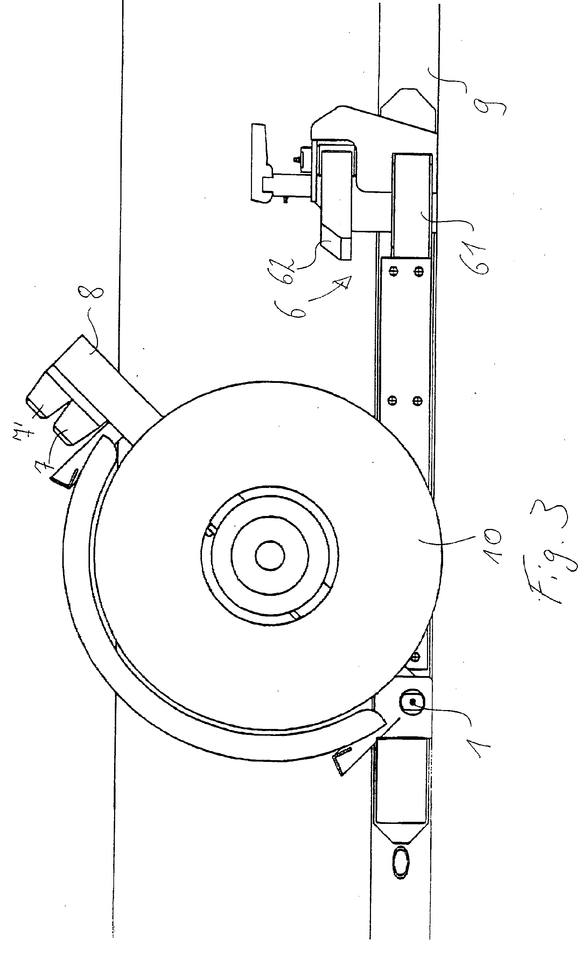

In der Figur 3 ist die Beladeposition des Fahrzeuganhängers dargestellt, in der ersichtlich ist, dass der zweite Lagerbereich 62 des Lagerschuhs 6 verschwenkt ist und sich die Schwinge 8 entgegen dem Uhrzeigersinn verschwenkt hat. Der Fahrzeuganhänger wurde also aus der Position gemäß der Figur 1 durch Betätigung der Verstelleinrichtungen 3, 4 langsam abgesenkt, so dass er bei entsprechender Absenkung des vorderen Stützrades flach auf dem Boden aufliegt. Der Fahrzeuganhänger kann nunmehr leicht beladen werden, beispielsweise mit einem schweren, nicht mehr fahrtüchtigen Fahrzeug oder beispielsweise mit Pferden. Nach dem Beladen wird über die Verstelleinrichtungen 3, 4 und das vordere Stützrad, das gegebenenfalls ebenfalls hydraulisch betätigt werden kann, der Anhänger in die Betriebsposition angehoben. Sobald die Schwinge 8 wieder in der Betriebsposition befindlich ist, im vorliegenden Fall parallel zu dem Rahmen 9 verläuft, wird der obere, zweite Lagerbereich 62 zurück verschwenkt, der Fahrzeuanhänger wird an das Zugfahrzeug angehängt und die Verstelleinrichtungen 3, 4 werden eingefahren.

Vorteilhafterweise sind in den Verstelleinrichtungen Kontakte und Sensoren angeordnet, die entweder ein Losfahren bei ausgefahrenen Verstelleinrichtungen 3, 4 verhindern oder eine entsprechende Warnmeldung ausgeben.

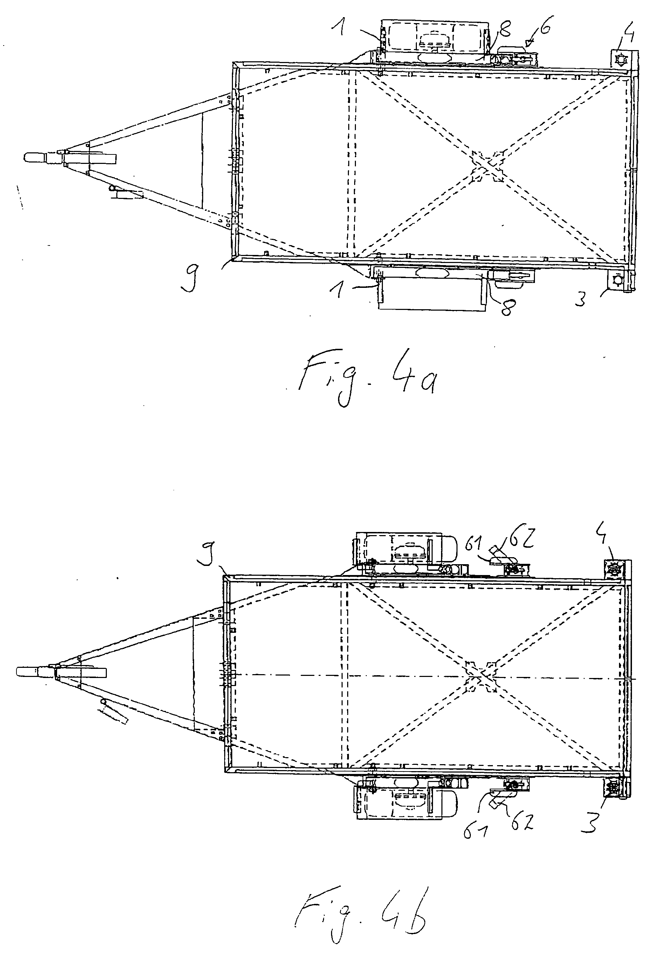

Die Figuren 4a und 4b zeigen den vorbeschriebenen Anhänger in Draufsicht, wobei in Figur 4b deutlich das seitliche Herausschwenken der zweiten Lagerbereiche 62 sowie der parallel zu dem Rahmen ausgerichtete erste Lagerbereich 61 erkennbar wird. Die Verstelleinrichtungen 3, 4 sind vorteilhafterweise am Endbereich des Rahmens 9 angeordnet, um eine möglichst effektive Verstellung zu bewirken.

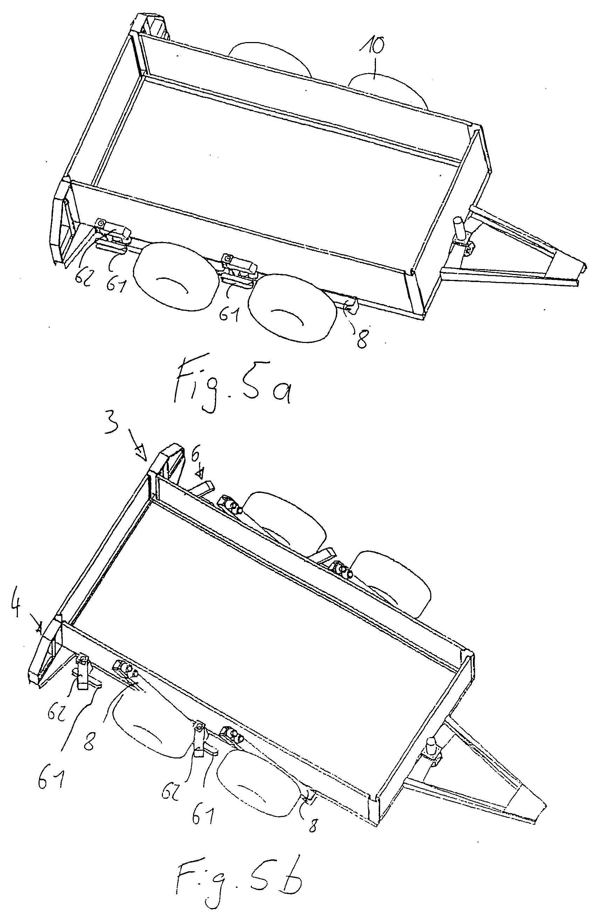

In den Figuren 5a und 5b sind eine Variante der Erfindung dargestellt, bei der auf jeder Seite des Rahmens 9 zwei Räder 10 hintereinander angeordnet sind. Die Figur 5a zeigt den Fahrzeuganhänger in Betriebsstellung, die Figur 5b in der abgesenkten Stellung. Um eine möglichst kompakte Bauweise des Fahrzeuganhängers zu erreichen, ist es vorteilhafterweise vorgesehen, dass der in Fahrtrichtung vordere Lagerschuh 6 unmittelbar an der Drehachse 1 der hinteren Schwinge 8 angeordnet ist, so dass eine kompakte Baueinheit entsteht. Lagerschuh 6 und Schwinge 8 sind somit kombiniert, so dass eine Hinteinanderanordnung mehrerer Räder bzw. Radaufhängungen ohne Probleme möglich ist.

In einer vorteilhaften Ausgestaltung ist es vorgesehen, dass sowohl der Lagerschuh 6 als auch die Schwinge 8 mit ihrer Drehachse 1 an einem Träger angeordnet ist, so dass sich hier eine als Baugruppe ausgebildete Radaufhängung ausbildet. Der Träger kann beispielsweise an dem Rahmen 9 verschraubt und/oder verschweißt werden, so dass eine einfache Aufstockung bzw. Anpassung des Fahrzeuganhängers an den gewünschten Einsatzbereich ermöglicht wird.

Zusätzlich können am vorderen Rahmenende Stützeinrichtungen vorgesehen sein, um bei einer lediglichen schrägen Absenkung des Fahrzeuganhängers eine Entlastung des Zugfahrzeuges bzw. der Anhängekupplung zu gewährleisten.

Der Lagerschuh 6 nimmt neben seiner Funktion als Anschlag für die Betriebsposition noch die Funktion der Führung der Schwinge 8 wahr, wobei es vorgesehen ist, den Lagerschuh 6 mit einer Einführschräge zu versehen, so dass gewährleistet ist, dass die Schwinge 8 auch bei einem leichten Versatz bei der Absenkung bzw. bei dem Anheben des Anhängers wieder in die korrekte Position parallel zu dem Rahmen 9 eingestellt wird. Dadurch wird ein exaktes und präzises Fahrverhalten gewährleistet.

Vorteilhafterweise wird der obere Lagerbereich 62 des Lagerschuhs 6 zweckmäßigerweise mit einer Verriegelung versehen, so dass ein unbeabsichtigtes Verschwenken und damit eine Freigabe der Schwinge 8 vermieden wird. Alternativ ist es möglich, auch unterhalb der Schwinge 8 einen Lagerbereich vorzusehen, um so die Schwinge 8 vollständig zu umschließen und eine zusätzliche Festigkeit und Stabilität in das Fahrwerk einzuführen.

## Patentansprüche

1. Fahrzeuganhänger, insbesondere Kraftfahrzeuganhänger, mit einer an einem eine Ladefläche aufnehmenden Rahmen (9) verschwenkbar gelagerten Schwinge (8), an der ein Rad (10) drehbar gelagert ist, mit einer Drehbegrenzung für die Schwinge (8) und mit zumindest einer Verstelleinrichtung (3, 4) zum Anheben des Rahmens (9) aus einer abgesenkten Beladeposition in eine Betriebsposition, **dadurch gekennzeichnet, dass** die Schwinge (8) in der Betriebsposition mit ihrem der Drehachse (1) gegenüberliegenden Ende in einem Lagerschuh (6) gelagert ist.

2. Fahrzeuganhänger nach Anspruch 1, **dadurch gekennzeichnet, dass** der Lagerschuh (6) in Fahrtrichtung hinter dem Drehpunkt der Schwinge (8) und dem Rad (10) angeordnet ist.

3. Fahrzeuganhänger nach Anspruch 1 oder 2, **dadurch gekennzeichnet, dass** der Lagerschuh (6) zumindest einen im wesentlichen parallel zu der Schwinge (8) verlaufenden, festgelegten ersten Lagerbereich (61) und zumindest einen senkrecht dazu und waagerecht verlaufenden zweiten Lagerbereich (62) aufweist, wobei der zweite Lagerbereich (62) verschwenkbar ausgebildet ist.

4. Fahrzeuganhänger nach Anspruch 3, **dadurch gekennzeichnet, dass** an dem Abschnitt der Schwinge (8), der in dem Lagerschuh (6) gelagert ist, Feder- und/oder Dämpferelemente (7, 7') angeordnet sind.

5. Fahrzeuganhänger nach Anspruch 4, **dadurch gekennzeichnet, dass** die Feder- und/oder Dämpferelemente (7, 7') als Gummielemente oder Parabelfedern ausgebildet sind.

6. Fahrzeuganhänger nach einem der voranstehenden Ansprüche, **dadurch gekennzeichnet, dass** die Verstelleinrichtung (3, 4) über einen Hydraulikantrieb, motorischen, insbesondere Elektroantrieb oder manuellen Antrieb angetrieben ist.

7. Fahrzeuganhänger nach einem der voranstehenden Ansprüche, **dadurch gekennzeichnet, dass** Stützeinrichtungen an dem Anhänger vorgesehen sind, die in Fahrtrichtung vor den Rädern (10) angeordnet sind und die beim Absenken des Rahmens (8) ausgefahren werden.

8. Fahrzeuganhänger nach Anspruch 7, **dadurch gekennzeichnet, dass** die Stützeinrichtungen als ausfahrbare Räder oder Ständer ausgebildet sind und eine Koppeleinrichtung vorgesehen ist, die die Stützeinrichtungen dergestalt ausfährt, dass bei abgesenktem Rahmen (9) die Anhängerkupplung des Zugfahrzeuges entlastet ist.

9. Fahrzeuganhänger nach einem der voranstehenden Ansprüche, **dadurch gekennzeichnet, dass** die Verstelleinrichtungen (3, 4) an dem hinteren Ende des Rahmens (9) angeordnet sind.

10. Fahrzeuganhänger nach einem der voranstehenden Ansprüche, **dadurch gekennzeichnet, dass** zwei oder mehr Schwingen (8) hintereinander auf einer Seite des Rahmens (9) angeordnet sind.

11. Fahrzeuganhänger nach einem der voranstehenden Ansprüche, **dadurch gekennzeichnet, dass** an dem Lagerschuh (6) eine Aufnahme für die Drehachse (1) der Schwinge (8) ausgebildet ist.

12. Radaufhängung für einen Fahrzeuganhänger mit einem Träger, an dem eine Schwinge (8) verschwenkbar gelagert ist sowie mit einem an dem Träger befestigten Lagerschuh (6), der das dem Drehpunkt der Schwinge (8) gegenüberliegende Ende der Schwinge (8) lagert.

13. Radaufhängung nach Anspruch 12, **dadurch gekennzeichnet, dass** die Schwinge (8) und der Lagerschuh (6) an dem Träger als Baugruppe montiert ist und der Träger an einem Fahrzeuganhängerrahmen (9) befestigbar ist.
